**Europäisches Patentamt**

**European Patent Office**

**Office européen des brevets**

(11) Veröffentlichungsnummer: **0 495 147 A1**

(12) **EUROPÄISCHE PATENTANMELDUNG**

(21) Anmeldenummer: **91100596.5**

(22) Anmeldetag: **18.01.91**

(51) Int. Cl.5: **G05B 19/415**

(43) Veröffentlichungstag der Anmeldung:
**22.07.92 Patentblatt 92/30**

(84) Benannte Vertragsstaaten:
**CH DE FR IT LI NL SE**

(71) Anmelder: **SIEMENS AKTIENGESELLSCHAFT**
**Wittelsbacherplatz 2**
**W-8000 München 2(DE)**

(72) Erfinder: **Höhn, Georg, Dipl.-Ing.**
**Gosberg 92**
**W-8551 Pinsberg(DE)**

(54) Verfahren zur Bahnkorrektur bei numerisch gesteuerten Maschinen.

(57) Bei der Bewegungsführung eines Maschinenelements (W) von mehrachsigen, numerisch gesteuerten Maschinen durch Vorgabe von "Off-line" errechneten und abgespeicherten Interpolationspunkten (IP), wird eine Werkzeug-Radius-Korrektur dadurch ermöglicht, daß auf der Basis der Interpolationspunkte (IP) Korrekturinterpolationspunkte (IP') errechnet werden und damit bei möglichst geringem Zeitaufwand eine neue Bahnkurve (B) erzeugt wird, mit der die Radius-Änderungen berücksichtigt werden. Zusätzlich kann eine Geschwindigkeitsänderung durch Vorgabe von Override-Werten erreicht werden, indem zwischen jeweils zwei Interpolationspunkte (IP,IP') Feininterpolationspunkte (FIP) gelegt werden.

FIG 1

Bei numerisch gesteuerten Maschinen, beispielsweise bei numerischen Werkzeugmaschinen oder Robotern, wird die Bahn auf der ein Werkzeug geführt wird, in eine Vielzahl von Bahnsegmenten unterteilt. Dies geschieht dadurch, daß von der numerischen Steuerung entlang der Bahnkurve eine Vielzahl von Interpolationspunkten berechnet wird, die von der jeweiligen (Werkzeug-)Führungseinrichtung der Maschine sukzessive abgefahren werden. Die Berechnung der Interpolationspunkte zu einer vorgegebenen Bahnkurve ist meist sehr zeitaufwendig und wird daher in vielen Fällen vor dem ersten Arbeitsgang im "Off-line"-Verfahren durchgeführt. Die berechneten Interpolationspunkte können dann abgespeichert und beim Betrieb der jeweiligen numerisch gesteuerten Maschine direkt an deren Lageregelkreis weitergegeben werden, worauf ein Werkzeug entlang der durch die Interpolationspunkte vorgegebenen Bahnkurve geführt wird.

Bei der Bearbeitung von Werkstücken kann es vorkommen, daß durch eine Änderung der Werkzeuggeometrie auch eine Änderung der Bahnkurve erforderlich ist. So kann sich beispielsweise der Radius eines Fräswerkzeugs durch Abnutzung verkleinern. Da bei kreisförmigen Werkzeugen gewöhnlich der Werkzeugmittelpunkt entlang der vorgegebenen Bahnkurve geführt wird, bedeutet dies, daß eine Abstandsänderung der Bahnkurve zur Werkstückkontur hin notwendig ist. Es könnte aber auch beispielsweise notwendig sein, ein abgenutztes Werkzeug gegen ein neues zu ersetzen. In diesem Fall würde sich bei einem kreisförmigen Werkzeug der Radius vergrößern, so daß die Bahnkurve einen größeren Abstand zur Werkstückkontur aufweisen müßte.

Die jeweilige Neuberechnung von Interpolationspunkten bei solchen Änderungen der Werkzeuggeometrie bei gleichbleibender Werkstückkontur führt zu großen Ausfallzeiten der Maschine.

Es ist deshalb Aufgabe der Erfindung, eine einfache Bahnkorrektur bei numerisch gesteuerten Maschinen zu erhalten.

Diese Aufgabe wird durch die Merkmale des Anspruchs 1 gelöst. Das Verfahren ist dabei sowohl für ebene als auch für räumliche Bahnkurven anwendbar. Bei ebenen Bahnkurven zeigt der Korrekturvektor in Richtung der Winkelhalbierenden des Winkels, der durch die vor und nach dem jeweiligen Interpolationspunkt liegenden Bahnsegmente gebildet wird. Bei räumlichen Bahnkurven muß bei der Bestimmung des Korrekturvektors zusätzlich noch die Orientierung des Werkzeugs berücksichtigt werden. Die Berechnung der Korrekturinterpolationspunkte erfordert bei ebenen Bahnkurven eine sehr geringe Rechenleistung, so daß diese auch während des Betriebs der numerisch gesteuerten Maschine, also "On-line", vorgenommen werden kann. Bei räumlichen Bahnkurven oder bei knapper on-line-Rechenzeit wird die Richtung des Korrekturvektors im off-line-Verfahren berechnet, so daß im Betrieb nur noch mit dem Betrag des Korrekturvektors gewichtet werden muß. Vom Anwender muß dabei lediglich die Änderung der Werkzeuggeometrie, im Falle eines kreisförmigen Werkzeugs die Radiusänderung, eingegeben werden. Bei Maschinen, die über entsprechende Meßeinrichtungen verfügen, können die Änderungen der Werkzeuggeometrie auch automatisch festgestellt und beim Bearbeitungsvorgang berücksichtigt werden. Auch im Fall der off-line-Berechnung der Korrekturinterpolationspunkte erreicht man eine erhebliche Zeitersparnis gegenüber der Neuberechnung von Interpolationspunkten.

Eine vorteilhafte Ausführung der Erfindung ist dadurch gekennzeichnet, daß jeweils zwischen zwei Korrekturinterpolationspunkten Feininterpolationspunkte in Abhängigkeit von einem vorgebbaren Steuerparameter erzeugt werden, wobei das Werkzeug von einem Korrekturinterpolationspunkt oder Feininterpolationspunkt zum jeweils nachfolgenden Feininterpolationspunkt oder Korrekturinterpolationspunkt geführt wird. Da die Verfahrzeit von einem Interpolationspunkt oder von einem Feininterpolationspunkt zum jeweils nächsten Feininterpolationspunkt oder nächsten Korrekturinterpolationspunkt jeweils durch den Interpolationstakt der numerischen Steuerung fest vorgegeben ist, kann durch die Vorgabe von zwischen den Korrekturinterpolationspunkten liegenden Feininterpolationspunkten die Bahngeschwindigkeit entsprechend dem Steuerparameter modifiziert werden.

Nach den Merkmalen des Anspruchs 3 läßt sich eine entsprechende Geschwindigkeitsänderung auch dann erreichen, wenn die Feininterpolationspunkte bereits schon zwischen zwei Interpolationspunkten definiert werden und dann zu jedem Interpolationspunkt oder Feininterpolationspunkt ein Korrekturinterpolationspunkt ermittelt wird. Welches der Verfahren zur Geschwindigkeitsänderung dabei den Vorzug erhält, kann vom Aufbau der numerischen Steuerung oder des entsprechenden Steuerprogramms abhängen.

Ein Ausführungsbeispiel wird im folgenden anhand der Figur näher beschrieben. Dabei zeigen:

FIG 1    die Führung von zwei Werkzeugen entlang zweier Bahkurven,

FIG 2    die Erzeugung von Feininterpolationspunkten zur Geschwindigkeitsänderung.

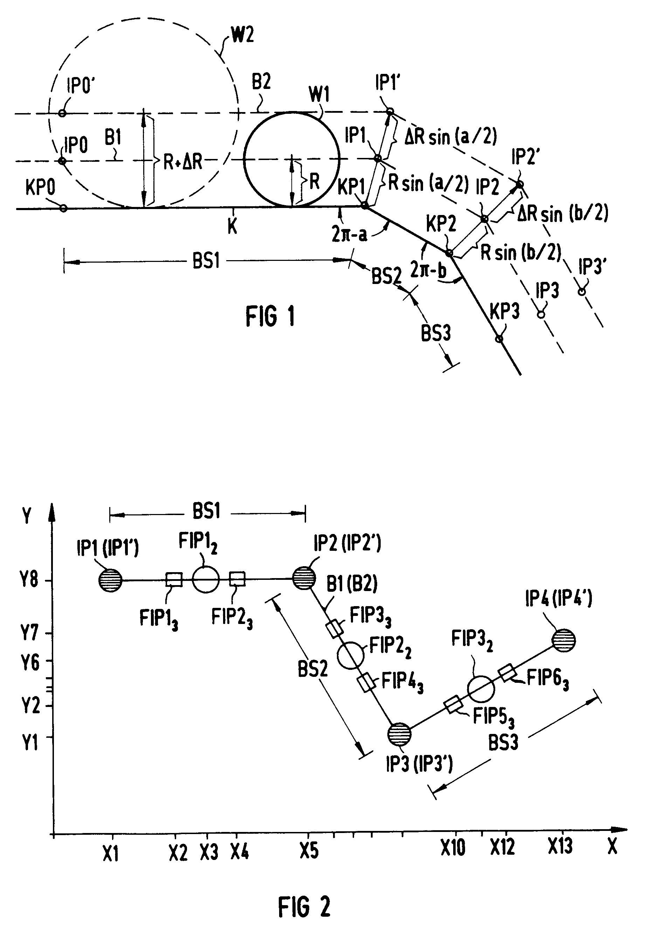

FIG 1 zeigt ein Werkzeug W1 mit dem Radius R, das entlang einer gestrichelt gezeichneten Bahnkurve B1 zur Bearbeitung der Werkstückkontur K geführt wird. Die Bahnkurve B1 ist in einzelne Bahnsegmente BS1, BS2, BS3 unterteilt, die jeweils durch die Interpolationspunkte IP0 und IP1, IP1 und IP2, IP2 und IP3, begrenzt sind. Die Interpolationspunkte IP0 bis IP3 liegen dabei jeweils im kürzesten Abstand zur Kontur K an den Konturpunkten KP0 bis KP3, d.h. bei einer geraden Konturstrecke besteht zwischen der Verbindung von Interpolationspunkt IP0 bzw. IP3 und Konturpunkt KP0 bzw. KP3 und der Kontur ein rechter Winkel. An den Eckpunkten der Kontur liegt die Verbindungsstrecke zwischen Konturpunkt und Interpolationspunkt - im Beispiel von Konturpunkt KP1 zu Interpolationspunkt IP1 oder vom Konturpunkt KP2 zu Interpolationspunkt IP2 - in Richtung der Winkelhalbierenden des durch die Eckkontur gebildeten äußeren Winkels a bzw. b. Die Strecke von Konturpunkt KP1 zum Interpolationspunkt IP1 bzw. vom Konturpunkt KP2 zum Interpolationspunkt IP2 beträgt damit R/sin(a/2) bzw. R/sin(b/2).

Das Werkzeug W1 soll nun durch das im Umriß gestrichelt gezeichnete Werkzeug W2 ersetzt werden. Damit auch das Werkzeug W2 die gleiche Kontur K bearbeitet, wie vorher das Werkzeug W1, muß für das Werkzeug W2 eine neue Bahnkurve B2 erzeugt werden. Dies kann an den Interpolationspunkten IP0 und IP3 in einfacher Weise dadurch geschehen, daß zu deren jeweiligen Koordinaten lediglich der Abstand delta R, um den das neue Werkzeug W2 vom ersten Werkzeug W1 abweicht, addiert wird. An den Eckpunkten der Werkzeugkkontur K, also an den Konturpunkten KP1 und KP2 wird zu den bisherigen Koordinaten der Interpolationspunkte IP1 bzw. IP2 ein jeweils neuer Korrekturinterpolationspunkt IP1', IP2' berechnet, der ebenfalls in Richtung der Winkelhalbierenden der Winkel a bzw. b zwischen den am jeweiligen Konturpunkt KP1, KP2 angrenzenden Verfahrstrecken liegt und dessen Abstand zum Interpolationspunkt IP1 bzw. IP2 gleich delta R/sinus(a/2) bzw. delta R/sinus(b/2) beträgt.

Der Mittelpunkt des Werkzeugs W2 wird dann entlang der durch die Korrekturinterpolationspunkte IP0' bis IP3' gebildeten neuen Bahnkurve B2 geführt. Die Abstände zwischen zwei Korrekturinterpolationspunkten IP0' bis IP3' sind, wie in FIG 1 leicht zu erkennen ist, geringfügig größer als die Abstände der bisherigen Interpolationspunkte IP0 bis IP3 auf der Bahnkurve B1. Dies führt zu einer geringfügigen Erhöhung der Geschwindigkeit des Werkzeugs W2, die jedoch wegen der im Regelfall geringfügigen Radiusänderungen der unterschiedlichen bzw. abgenutzten Werkzeuge kaum ins Gewicht fällt.

Es könnte jedoch auch der Fall sein, daß am Werkstück K zwei unterschiedliche Bearbeitungsvorgänge mit zwei unterschiedlich großen Werkzeugen und mit unterschiedlichen Geschwindigkeiten ausgeführt werden sollen. Beispielsweise könnte nach einem Fräs-Arbeitsgang ein Schleif-Arbeitsgang folgen, wobei ein Schleifwerkzeug W2 einen größeren Durchmesser aufweisen soll als ein Fräswerkzeug W1. Zur Erzielung einer hohen Schleifgüte wird das Schleifwerkzeug W2 zwar eine wesentlich höhere Umdrehungsgeschwindigkeit als das Fräswerkzeug W1 aufweisen, die Bahngeschwindigkeit des Schleifwerkzeugs W2 wird jedoch gegenüber der Bahngeschwindigkeit des Fräswerkzeugs W1 wesentlich verringert werden müssen. Eine Möglichkeit zur Modifikation der Bahngeschwindigkeit wird im folgenden anhand der FIG 2 näher erläutert.

FIG 2 zeigt eine Bahnkurve mit Interpolations- und Feininterpolationspunkten IP, FIP. Bei der Bahnkurve kann es sich sowohl um eine der FIG 1 entsprechende erste Bahnkurve B1, die durch die Interpolationspunkte IP1 bis IP4 vorgegeben ist, oder um eine der der FIG 1 entsprechenden Bahnkurve B2, die durch die Korrekturinterpolationspunkte IP1' bis IP4' vorgegeben ist, handeln. Die im folgenden beschriebene Bestimmung der Feininterpolationspunkte FIP kann nämlich sowohl auf Basis der durch die Interpolationspunkte IP1 bis IP4 vorgegebenen ursprünglichen Bahnkurve B1 (FIG 1) durchgeführt werden, als auch auf Basis der durch die Korrekturinterpolationspunkte IP0' bis IP3' vorgegebenen Bahnkurve B2 (FIG 1). Im ersteren Fall müssen nach Bestimmung der Feininterpolationspunkte FIP auf der Bahnkurve B1 zu jedem Interpolationspunkt IP und Feininterpolationspunkt FIP Korrekturinterpolationspunkte IP' berechnet werden, im zweiten Fall werden zunächst die Korrekturinterpolationspunkte IP' auf Basis der Interpolationspunkte IP bestimmt und dann zwischen jeweils zwei Korrekturinterpolationspunkten IP' Feininterpolationspunkte FIP gelegt. Wie bereits eingangs erwähnt, kann es vom Aufbau der numerischen Steuerung oder des entsprechenden Steuerprogramms abhängen, welches der Verfahren zur Geschwindigkeitsänderung den Vorzug erhält. Im folgenden Ausführungsbeispiel wird die Geschwindigkeitsmodifikation durch Erzeugen von Feininterpolationspunkten FIP zwischen jeweils zwei Interpolationspunkten IP allgemein beschrieben.

Die in FIG 2 dargestellte Bahnkurve ist in drei Bahnsegmente BS1, BS2 und BS3 unterteilt, die jeweils durch die Interpolationspunkte IP1 und IP2, IP2 und IP3, IP3 und IP4 begrenzt sind. Die Bahnkurve liegt der Einfachheit halber in der XY-Ebene, es könnte sich jedoch auch um eine räumliche Bahnkurve handeln. Die Koordinaten der Interpolationspunkte IP1 bis IP4 lassen sich jeweils durch (X, Y) Wertepaare angeben.

Das Werkzeug einer numerisch gesteuerten Maschine wird im Normalfall, d.h. ohne Override-Vorgabe von einem Interpolationspunkt IP1 bis IP4 zum jeweils nächsten Interpolationspunkt IP1 bis IP4 linear geführt.

Als "Werkzeug" ist dabei jede Vorrichtung zu verstehen, die bei numerisch gesteuerten Maschinen zum Abfahren einer Bahnkurve oder zur Punkt-zu Punkt-Bewegung eingesetzt wird. Das kann bei einer Werkzeugmaschine oder einem Roboter beispielsweise ein am Werkzeugschlitten oder an der Roboterhand befindliches Fräs-, Schleif- oder Bohrwerkzeug, etc. sein, das mit dem zu bearbeitenden Werkstück im Eingriff steht, es kann sich aber auch um eine Vorrichtung handeln, die eine Kontur - auch berührungslos - abtastet oder vermißt, etc. oder die für beliebige andere Zwecke einsetzbar ist.

Angenommen, die Strecke vom Interpolationspunkt IP1, also von den Koordinaten (X1,Y8) zum Interpolationspunkt IP2, also zu den Koordinaten (X5,Y8) beträgt 100 Inkremente (wobei ein Inkrement einer bestimmten Wegstrecke entspricht), so würde diese Strecke in der Systemtaktzeit von beispielsweise einer Sekunde abgefahren. Die Geschwindigkeit des Werkzeugs beträgt somit 100 Inkremente pro Sekunde.

Soll die Geschwindigkeit, mit der die Bahnkurve abgefahren werden soll, auf die Hälfte reduziert werden, so kann als Steuerparameter der Wert N = 2 vorgegeben werden, was einem Override von 50 % entspricht.

Aufgrund der Vorgabe des Override-Wertes werden von der numerischen Steuerung Feininterpolationspunkte $FIP1_2$, $FIP2_2$, $FIP3_2$ (der Index gibt den Wert des jeweiligen Steuerparameters an), die jeweils in der Mitte zwischen zwei Interpolationspunkten IP1 bis IP4 auf den Bahnsegmenten BS1, BS2, BS3 liegen und in der Figur mit weißen Kreisen gekennzeichnet sind. Die Wegstrecke von einem der Interpolationspunke IP1 bis IP4 zu einem Feininterpolationspunkt $FIP1_2$ bis $FIP3_2$ und umgekehrt, beträgt nun jeweils 50 Inkremente. Pro Systemzeittakt, im Beispiel also pro Sekunde werden nun nicht mehr 100 Inkremente, sondern nur jeweils 50 Inkremente abgefahren, so daß sich die Bahngeschwindigkeit des Werkzeugs genau um die Hälfte reduziert hat.

Um die Geschwindigkeit auf ein Drittel zu reduzieren, wird ein Steuerparameter von N = 3 vorgegeben, was einem Override-Wert von 33 % entspricht. Damit werden von der numerischen Steuerung Feininterpolationspunkte $FIP1_3$ bis $FIP6_3$ berechnet. Diese Feininterpolationspunkte $FIP1_1$ bis $FIP6_3$ sind in der Figur durch quadratische Kästchen gekennzeichnet. Die Entfernung der Feininterpolationspunkte $FIP1_3$ bis $FIP6_3$ von den jeweiligen Interpolationspunkten IP1 bis IP3 beträgt nun jeweils 33 bzw. 66 Inkremente. Da bei der Division von 100 Inkrementen durch den Steuerparameter N = 3 ein Rest verbleibt, betragen die Entfernungen von den Feininterpolationspunkten $FIP2_3$, $FIP4_3$ und $FIP6_3$ zu den Interpolationspunkten IP2, IP3 und IP4 jeweils 34 Inkremente, so daß diese Strek-

ken mit einer nicht ins Gewicht fallenden höheren Geschwindigkeit abgefahren werden.

Dadurch, daß die vorher berechneten Interpolationspunkte IP1 bis IP4 - auch wenn bei Vorgabe eines Override-Werts Feininterpolationswerte FIP berechnet werden - auf jeden Fall angefahren werden, ist die Bahntreue des Verfahrens 100 % gewährleistet.

## Patentansprüche

1. Verfahren zur Bahnkorrektur bei numerisch gesteuerten Maschinen mit folgenden Verfahrensschritten:

a) Ein Werkzeug (W1) wird entlang einer Bahnkurve (B1) in einem vorgegebenen Abstand (R) zu einer Kontur (K) geführt, wobei die Bahnkurve (B1) in Bahnsegmente (BS) unterteilt ist, die durch jeweils zwei Interpolationspunkte (IP) vorgegeben sind,

b) bei einer Änderung der Werkzeuggeometrie, die eine Änderung des Abstands (R) der Bahnkurve (B1) von der Werkzeugkontur (K) bedingt, wird jeweils ein Korrekturinterpolationspunkt (IP') ermittelt, indem zu jedem Interpolationspunkt (IP) ein Korrekturvektor (delta R) addiert wird,

c) durch die Korrekturinterpolationspunkte (IP') wird eine korrigierte Bahnkurve (B2) erzeugt, entlang der ein weiteres Werkzeug (W2) führbar ist.

2. Verfahren nach Anspruch 1, wobei

a) jeweils zwischen zwei Korrekturinterpolationspunkten (IP') Feininterpolationspunkte (FIP) in Abhängigkeit von einem vorgebbaren Steuerparameter erzeugt werden,

b) das Werkzeug von einem Korrekturinterpolationspunkt (IP') oder Feininterpolationspunkt (FIP) zum jeweils nachfolgenden Feininterpolationspunkt (FIP) oder Korrekturinterpolationspunkt (IP') geführt wird.

3. Verfahren nach Anspruch 1, wobei

a) jeweils zwischen zwei Interpolationspunkten (IP) Feininterpolationspunkte (FIP) in Abhängigkeit von einem vorgebbaren Steuerparameter erzeugt werden,

b) ein Korrekturinterpolationspunkt (IP') zu jedem Interpolationspunkt (IP) oder Feininterpolationspunkt (FIP) erzeugt wird.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 679 955 (RHOADES) <br> * das ganze Dokument * <br> --- | 1-3 | G05B19/415 |
| A | FR-A-2 268 297 (SIEMENS) <br> * das ganze Dokument * <br> --- | 1-3 | |
| A | EP-A-0 319 587 (FANUC) <br> * das ganze Dokument * <br> --- | 1-3 | |
| A | OE-A-3 327 760 (SIEMENS) <br> * das ganze Dokument * <br><br> ----- | 1-3 | |
| | | | **RECHERCHIERTE SACHGEBIETE (Int. Cl.5)** <br><br> G04B <br> G05B |

Der vorliegende Recherchenbericht wurde für alle Patentansprüche erstellt

| Recherchenort | Abschlußdatum der Recherche | Prüfer |
|---|---|---|
| DEN HAAG | 14 OCTOBER 1991 | RESSENAAR J.P. |